(19) Europäisches Patentamt
European Patent Office
Office européen des brevets

(11) **EP 2 398 200 A1**

(12) **EUROPEAN PATENT APPLICATION**

(43) Date of publication:
**21.12.2011 Bulletin 2011/51**

(51) Int Cl.:
*H04L 27/26* (2006.01)  *H04L 5/00* (2006.01)

(21) Application number: **10006199.3**

(22) Date of filing: **15.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicants:
- **MITSUBISHI ELECTRIC R&D CENTRE EUROPE B.V.**
  **1119 NS Schiphol-Rijk (NL)**
  Designated Contracting States:
  **FR**
- **Mitsubishi Electric Corporation**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO SE SI SK SM TR**

(72) Inventor: **Castelain, Damien**
**35708 Rennes Cedex 7 (FR)**

(74) Representative: **Maillet, Alain**
**Cabinet Le Guen Maillet**
**5, place Newquay**
**B.P. 70250**
**35802 Dinard Cedex (FR)**

(54) **Method and device for transferring data and information enabling an estimate of a wireless link**

(57)     A method and devices for transferring data and information enabling an estimate of a wireless link between a source and at least one receiver using single carrier orthogonal frequency division multiplex scheme. The source :
- spreads data from the time domain to the frequency domain,
- replaces at least a part of spread data by at least one pilot sequence,
- maps spread data which are not replaced by the at least one pilot sequence and the at least one pilot sequence replacing spread data on subcarriers,
- executes an orthogonal frequency division multiplex modulation on the mapped data and the at least one mapped pilot sequence in order to form an orthogonal frequency division multiplex modulated symbol,
- transfers the orthogonal frequency division multiplex modulated symbol to the receiver.
At the receivers, the equalisation coeffients of the data located in the pilots positions are set to zero.

Fig. 4

EP 2 398 200 A1

## Description

The present invention relates generally to a method and a device for transferring data and information enabling an estimate of the wireless link between a source and a receiver using single carrier orthogonal frequency division multiplex scheme.

Single carrier orthogonal frequency division multiplex modulation scheme is a modulation scheme with orthogonal frequency division multiplex type multiplexing but single-carrier-like envelope. It can be implemented either in the time-domain or in the frequency-domain and is also called discrete Fourier transform spread orthogonal frequency division multiplex.

The main advantage with respect to orthogonal frequency division multiplex is that the discrete Fourier transform pre-coding restores the single carrier nature of the signal, i.e. a low peak to average power ratio.

Pilot sequences transmission is necessary for enabling the determination of an estimate of the wireless link between a source and a receiver. It is commonly considered that a pilot sequence cannot be scattered with single carrier orthogonal frequency division multiplex modulation scheme data without completely degrading the peak to average power ratio structure of the transmitted signal.

That's the reason why, in 3GPP TSG-RAN, "TR 25.814: "Physical Layer Aspects for Evolved UTRA", Version 7.1.0, 2006-09, pilot sequence is mapped on all the subcarriers, referenced as a pilot symbol. Such a pilot symbol is regularly inserted in the frame. In this case, a classical way of performing channel estimation is to estimate the channel at the pilot symbols positions and finally the channel is estimated at all positions by performing a time interpolation between two pilot symbols.

The drawback of this classical method appeared in the time interpolation. In order not to reduce the data throughput too much, one must limit the number of pilot symbols inserted. For example, if the pilot insertion rate is 1/12, it implies that a pilot symbol shall be inserted every twelve orthogonal frequency division multiplex symbols. This limits the capability of the system to follow the channel variations of the signal for example due to the Doppler effect.

According to the Nyquist theorem, if the orthogonal frequency division multiplex rate is 1/Ts, a bound on the maximum acceptable Doppler frequency is equal to :

$$f_{max} = \frac{1}{24T_s}$$

This bound is due to the pilot structure itself and not to the related estimation method.

The present invention aims at providing a method and a device which enable a good following of the channel variation while preserving the low peak to average power ratio structure of single carrier orthogonal frequency division multiplex modulation scheme.

To that end, the present invention concerns a method for transferring data and information enabling an estimate of a wireless link between a source and at least one receiver using single carrier orthogonal frequency division multiplex scheme, characterised in that the method comprises the steps, executed by the source, of :

- spreading data from the time domain to the frequency domain,
- replacing at least a part of spread data by at least one pilot sequence,
- mapping spread data which are not replaced by the at least one pilot sequence and the at least one pilot sequence replacing spread data on subcarriers,
- executing an orthogonal frequency division multiplex modulation on the mapped data and the at least one mapped pilot sequence in order to form an orthogonal frequency division multiplex modulated symbol,
- transferring the orthogonal frequency division multiplex modulated symbol to the receiver.

The present invention also concerns a device for transferring data and information enabling an estimate of a wireless link between a source and at least one receiver using single carrier orthogonal frequency division multiplex scheme, characterised in that the device is included in the source and comprises :

- means for spreading data from the time domain to the frequency domain,
- means for replacing at least a part of spread data by at least one pilot sequence,
- means for mapping spread data which are not replaced by the at least one pilot sequence and the at least one pilot sequence replacing spread data on subcarriers,
- means for executing an orthogonal frequency division multiplex modulation on the mapped data and the at least one mapped pilot sequence in order to form an orthogonal frequency division multiplex modulated symbol,
- means for transferring the orthogonal frequency division multiplex modulated symbol to the receiver.

Thus, as data and pilot sequences are merged, the periodicity of pilot sequence insertion can be increased without reducing the data throughput, the channel variations and/or synchronization are followed more efficiently while preserving the low peak to average power ratio structure of single carrier orthogonal frequency division multiplex modulation scheme.

The inventor has found that by replacing a part of spread data by at least one pilot sequence, the low peak to average power ratio structure of single carrier orthogonal frequency division multiplex modulation scheme is preserved.

According to a particular feature, the at least one pilot sequence has the property that the variations of amplitudes obtained after performing a discrete Fourier transform over said at least one pilot sequence are limited.

Thus, the peak to average power ratio is improved.

According to a particular feature, the at least one pilot sequence is time shifted by half a sampling period or spread data which are not replaced by the at least one pilot sequence are time shifted by half a sampling period.

Thus, the peak to average power ratio is improved.

The inventor has found that the global signal, in time dimension, corresponds to the sum of two multiplexed signals, data and pilot sequences. As the interpolation in time dimension is a linear process, the global interpolated signal corresponds also to the sum of two signals, the interpolated data signal and the interpolated pilot signal.

For the data in the time dimension, if no interpolation is performed and if a x-phase shift keying constellation is used, a constant amplitude is obtained every sample period, and the maximum peaks after interpolation are placed just in-between these time instants. The same phenomenon occurs with the pilot sequence having the property that almost fixed amplitudes are obtained also after performing a discrete Fourier transform over said at least one pilot sequence which is shifted by an integer number of sampling periods.

Therefore, in this case, two signals are added, the peaks of which are placed at the same positions. By time shifting the pilot sequence or spread data which are not replaced by the at least one pilot sequence of half a sampling period, the peaks of each signal are now interleaved. This implies that the peaks of the global signal, sum of both, are reduced.

If a non constant constellation is used, e.g. sixteen or sixty four quadrature amplitude modulation, the amplitude is no longer constant every sample period. However, the peaks will still be placed at the same positions, i.e. just in-between these time instants, and the peaks of the global signal will still be reduced by modifying the pilot sequence.

According to a particular feature, the at least one pilot sequence is a Zadoff-Chu sequence.

Thus, the peak to average power ratio is improved.

According to a particular feature, prior spreading from the time domain to the frequency domain, the method comprises further steps of:

- coding and modulating data in order to form elementary symbols,
- performing a constellation shift of a predetermined value of degrees for one elementary symbol in two.

Thus, the peak to average power ratio is improved.

According to a particular feature, the modulation is a Quadrature Phase Shift Keying modulation and the predetermined value is equal to forty five.

Thus, the peak to average power ratio is improved.

According to a particular feature, the source has one antenna or plural antennas for transferring the orthogonal frequency division multiplex modulated symbols.

Thus, the peak to average power ratio is improved.

According to a particular feature, the method is executed for plural consecutive single carrier orthogonal frequency division multiplex modulation symbols.

The present invention concerns also a method for estimating a wireless link between a source and a receiver using single carrier orthogonal frequency division multiplex scheme, characterised in that the method comprises the steps, executed by the receiver, of :

- receiving symbols,
- transforming the received symbols from the time domain to the frequency domain, the received symbols being formed by data and at least one pilot sequence, data and pilot sequence being mapped on subcarriers of the link,
- estimating the link on subcarriers on which the at least one pilot sequence is mapped and on which data are mapped,
- replacing each element of the at least one pilot sequence by an element of which a reliability information is set to zero,
- performing an equalisation of the link on the subcarriers on which data are mapped and on each subcarrier on which one element is mapped.

The present invention concerns also a device for estimating a wireless link between a source and a receiver using single carrier orthogonal frequency division multiplex scheme, characterised in that the device is included in the receiver and comprises :

- means for receiving symbols,
- means for transforming the received symbols from the time domain to the frequency domain, the received symbols being formed by data and at least one pilot sequence, data and pilot sequence being mapped on subcarriers of the link,
- means for estimating the link on subcarriers on which the at least one pilot sequence is mapped and on which data are mapped,
- means for replacing each element of the at least one pilot sequence by an element of which a reliability information is set to zero,

- means for performing an equalisation of the link on the subcarriers on which data are mapped and on each subcarrier on which one element is mapped.

Thus, it is possible to estimate the wireless link or to perform synchronization without decreasing too much the overall performances of the communication. By replacing each element of the at least one pilot sequence by an element of which a reliability information is set to zero the puncturing which is executed at the source does not degrade or does not degrade too much the performances of the equalization at the receiver.

According to a particular feature, the at least one pilot sequence has the property that the variations of amplitudes obtained after performing a discrete Fourier transform over said at least one pilot sequence are limited.

Thus, the peak to average power ratio is improved.

According to a particular feature, the at least one pilot sequence is time shifted by half a sampling period or spread data which are not replaced by the at least one pilot sequence are time shifted by half a sampling period.

Thus, the peak to average power ratio is improved.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example of embodiment, the said description being produced with reference to the accompanying drawings, among which :

Fig. 1 represents a wireless link in which the present invention is implemented;
Fig. 2 is a diagram representing the architecture of a source in which the present invention is implemented ;
Fig. 3 discloses a block diagram of components of the wireless interface of the source;
Fig. 4 discloses a block diagram of frame builder of the source according to the present invention ;
Fig. 5a discloses a first example of the merging of pilot sequences and data according to the present invention ;
Fig. 5b discloses a second example of the merging of pilot sequences and data according to the present invention ;

Fig. 6 is a diagram representing the architecture of a receiver in which the present invention is implemented ;
Fig. 7 discloses a block diagram of components of the wireless interface of the receiver;
Fig. 8 discloses an example of an algorithm executed by a source according to the present invention;
Fig. 9 discloses an example of an algorithm executed by a receiver according to the present invention.

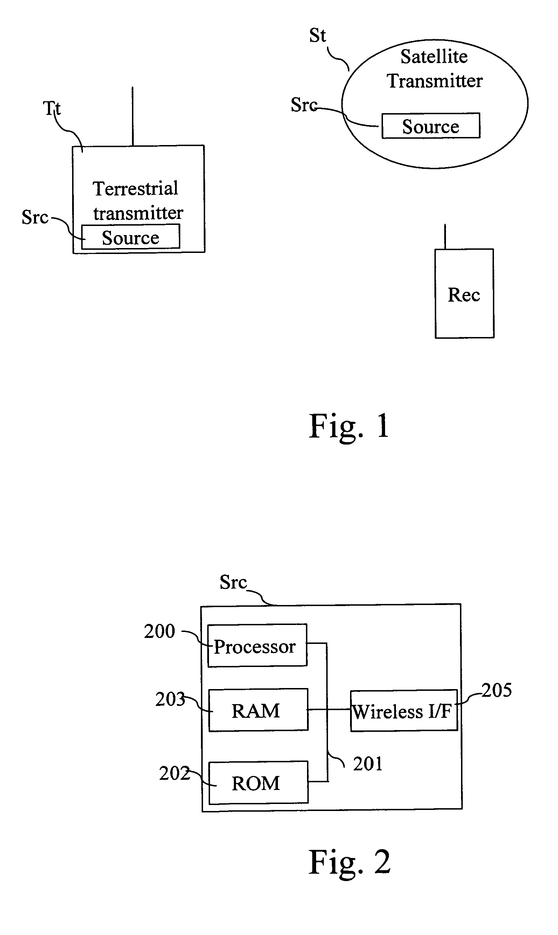

**Fig. 1** represents a wireless link in which the present invention is implemented.

The present invention will be disclosed in an example in which the signals transferred by a source Src are broadcasted to receivers Rec. A source Src may be included in a satellite St or in a terrestrial transmitter Tt.

Only one satellite St and one terrestrial transmitter St are shown in the Fig. 1 for the sake of simplicity, but the wireless link may comprise a more important number of satellites St and/or of terrestrial transmitters St.

Only one receiver Rec is shown in the Fig. 1 for the sake of simplicity, but signals are broadcasted to a more important number of receivers Rec.

The receiver Rec may be a mobile terminal to which data like video signals are broadcasted.

Data and information enabling an estimate of the wireless link between a source and a one receiver are transferred using single carrier orthogonal frequency division multiplex scheme (SC-OFDM).

According to the invention, the source Src:

- spreads data from the time domain to the frequency domain,
- replaces at least a part of spread data by at least one pilot sequence,
- maps spread data which are not replaced by the at least one pilot sequence and the at least one pilot sequence replacing spread data on subcarriers,
- executes an orthogonal frequency division multiplex modulation on the mapped data and the at least one mapped pilot sequence in order to form an orthogonal frequency division multiplex modulated symbol,
- transfers the orthogonal frequency division multiplex modulated symbol to the receiver.

According to the invention, the receiver Rec:

- receives symbols,
- transforms the received symbols from the time domain to the frequency domain, the received symbols being formed by data and at least one pilot sequence, data and pilot sequence being mapped on subcarriers of the link,
- estimates the link on subcarriers on which the at least one pilot sequence is mapped and on which data are mapped,
- replaces each element of the at least one pilot sequence by an element of which a reliability information is set to zero,
- performs an equalisation of the link on the subcarriers on which data are mapped and on each subcarrier on which one element is mapped.

**Fig. 2** is a diagram representing the architecture of a source in which the present invention is implemented.

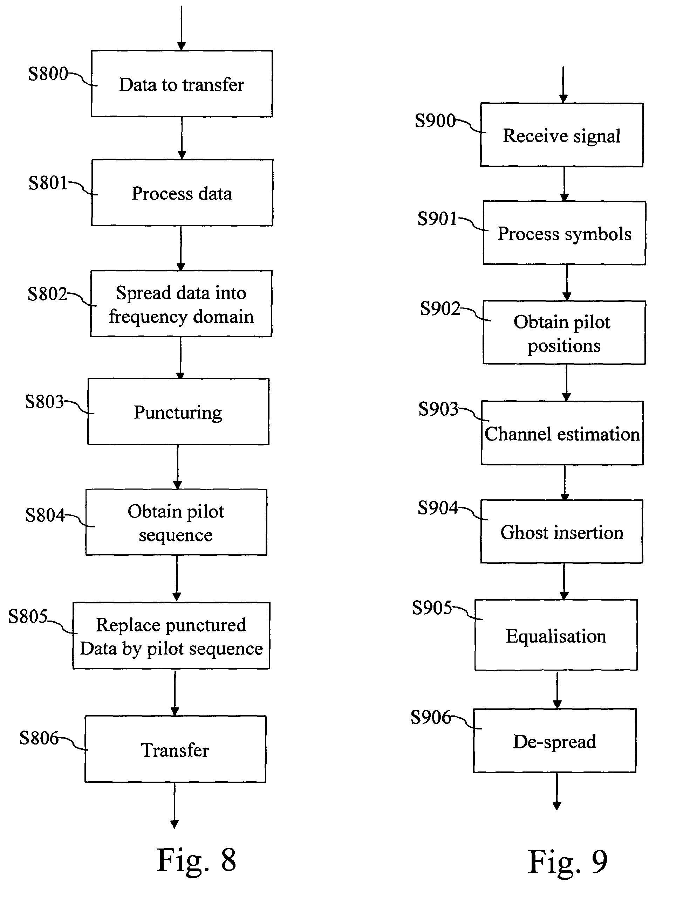

The source Src has, for example, an architecture based on components connected together by a bus 201 and a processor 200 controlled by the program as disclosed in Fig. 8.

It has to be noted here that the source Src may have an architecture based on dedicated integrated circuits.

The bus 201 links the processor 200 to a read only memory ROM 202, a random access memory RAM 203 and a wireless interface 205.

The memory 203 contains registers intended to receive variables and the instructions of the program related to the algorithm as disclosed in Fig. 8.

The processor 200 controls the operation of the wireless interface 205.

The read only memory 202 contains instructions of the program related to the algorithm as disclosed in Fig. 8, which are transferred, when the source Src is powered on, to the random access memory 203.

The wireless interface 205 comprises means for puncturing spread data, means for replacing the punctured data by at least one pilot sequence and means for transferring data and the at least one pilot sequence according to the invention to at least one receiver Rec.

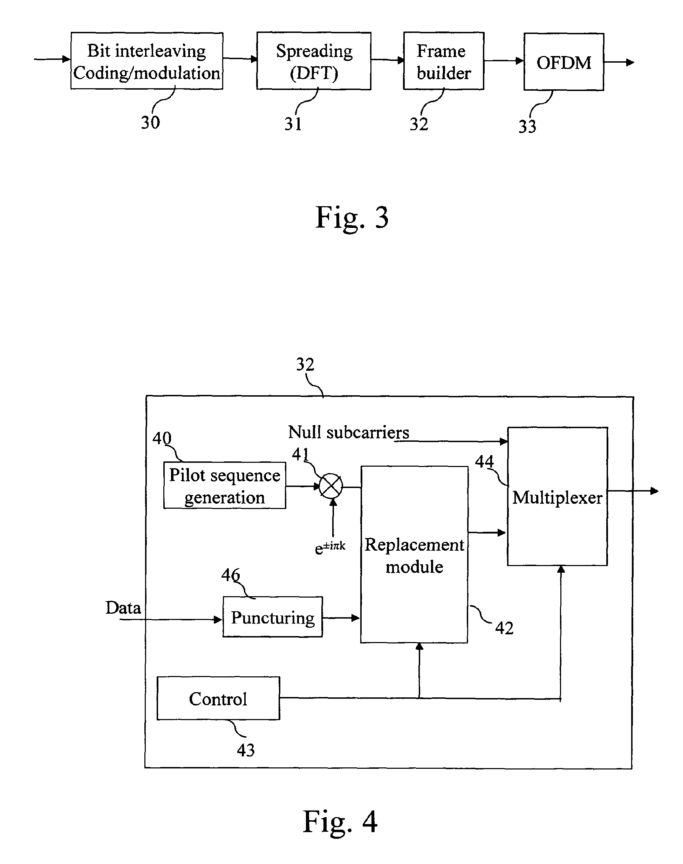

The wireless interface 205 comprises components as disclosed in Fig. 3.

**Fig. 3** discloses a block diagram of components of the wireless interface of the source.

Data to be transmitted are interleaved, coded and organized as data elementary symbols by the coding and modulation module 30 giving a set of data elementary symbols.

In a variant of realization, the coding and modulation module 30 performs a constellation shift of a predetermined value of degrees for one data elementary symbol in two.

If the modulation is a Quadrature Phase Shift Keying modulation, the predetermined value is equal to forty five.

Then, the data elementary symbols are spread in the frequency domain by the DFT (Discrete Fourier Transform) module 31 in order to form a spread data block composed of spread data symbols. In a variant, the DFT module is replaced by a Fast Fourier Transform module or any other processing module.

At least one spread data block is punctured by a frame builder 32.

The frame builder 32 replaces the punctured part of the spread data block by at least one pilot sequence. The remaining part of the spread data symbols and the at least one pilot sequence are mapped on subcarriers comprised in the frequency band by the frame builder 32 in order to form a hybrid block. The frame builder 32 will be disclosed in more detail in reference to Fig. 4.

Each hybrid block and each spread data block which has not be punctured is processed by the OFDM modulation module 33 in order to form a SC-OFDM symbol prior to be transferred through one or plural antennas.

An optional cyclic prefix insertion module, not shown in Fig. 3, can be applied before transmission through the antenna of the source Src.

A SC-OFDM symbol is obtained by spreading data elementary symbols by a first spreading module from the time domain to the frequency domain, by puncturing or not the spread data symbols, by replacing the punctured part of the spread data block by at least one pilot sequence in order to form a hybrid block, by mapping the hybrid block or the spread data block which has not be punctured on subcarriers comprised in the frequency band and by modulating the mapped hybrid block or the mapped spread data block which has not be punctured using an orthogonal frequency division multiplex module.

**Fig. 4** discloses a block diagram of frame builder of the source according to the present invention.

The frame builder 32 comprises a pilot sequence generation module 40. The pilot sequences have the property that almost fixed amplitudes are obtained also after performing a DFT over such sequences, i.e. pilot sequences have the property that the variations of amplitudes obtained after performing a discrete Fourier transform over said at least one pilot sequence are limited.

Variations of amplitude are limited if the amplitude is constant or varies at most from plus fifty percent from the average amplitude value.

It has to be noted here that the amplitude is an absolute value, not a power of two.

For example, pilot sequences are pilot sequences like Zadoff-Chu sequences. Zadoff-Chu sequences are parameterised by three integers $N$, $p$ and $l$.

Zadoff-Chu sequences are derived from the following formula:

$$N\ even: \quad x_k = e^{-i\frac{2\pi}{N}\left(pk^2+lk\right)}$$

$$N\ odd: \quad x_k = e^{-i\frac{2\pi}{N}\left(p\frac{k(k+1)}{2}+lk\right)}$$

Where N is the length of the sequence, p is the index of the sequence and $l$ is the (time) shift of the sequence.

If $l$ equals to zero, the sequence is known as the root ($p$) sequence.

Zadoff-Chu sequences offer several interesting characteristics like a perfect autocorrelation, good intercorrelation by varying *p* and *l* and low envelope fluctuation in both time and frequency dimensions.

In a variant, the at least one pilot sequence is as the one disclosed in the document of ETSI ETS 300401 (second edition, May 1997) or ETSI EN 300401 (V1.4.1, June 2006), "Radio broadcasting systems; Digital Audio Broadcasting (DAB) to mobile, portable and fixed receivers".

According to a particular mode of realization of the present invention, the frame builder 32 comprises half period shift module 41 for shifting the pilot sequences by half a sampling period duration.

According to a particular mode of realization of the present invention, the frame builder 32 comprises half period shift module not shown in Fig. 4 for shifting data instead of the pilot sequences by half a sampling period duration.

For the example, if Zadoff-Chu sequences are used, the sequences provided by the half period shift module 41 is as follows:

$$N\ even: \quad x_k = e^{-i\frac{2\pi}{N}\left(pk^2 + lk + 0.5\,k\right)}$$

$$N\ odd: \quad x_k = e^{-i\frac{2\pi}{N}\left(p\frac{k(k+1)}{2} + lk + 0.5\,k\right)}$$

A time shift of half a sample period corresponds in the frequency domain to a phase slope equal to $-\pi k/N$.

It has to be noted here that the sequences provided by the half period shift module 41 may also be as follows:

$$N\ even: \quad x_k = e^{-i\frac{2\pi}{N}\left(pk^2 + lk - 0.5\,k\right)}$$

$$N\ odd: \quad x_k = e^{-i\frac{2\pi}{N}\left(p\frac{k(k+1)}{2} + lk - 0.5\,k\right)} \cdot$$

The shifted pilot sequences are mapped by the replacement module 42 on subcarriers on which parts of spread data symbols should be mapped if they were not punctured.

The frame builder 32 comprises a multiplexer 44 which multiplexes the output of the replacement module 42 with for example null data and maps the hybrid block and null data on subcarriers comprised in the frequency band.

The replacement module 42 and the multiplexor 44 are controlled by the controller 43.

The frame builder 32 comprises a puncturing module 46 which puncture the spread data.

The output of the puncturing module 46 is connected to the replacement module 42.

The present invention is also applicable in multiple input multiple output (MIMO) transmission scheme like for example as the one proposed by S.M. Alamouti, in the paper entitled "A simple transmit diversity technique for wireless communications", published in IEEE J. Select. Areas Communications, vol. 16, pp. 1451-1458, October 1998 with two or more transmit antennas.

Different Zadoff-Chu sequences may be used for the different antennas. In the two-antenna case, if $x_k$ is the pilot sequence defined in the frequency domain, wherein $k$ is the subcarrier index transmitted by a first antenna, the second antenna transmits the pilot sequence $(-1)^k x_k e^{j\theta}$ where $\theta$ is a predetermined constant value.

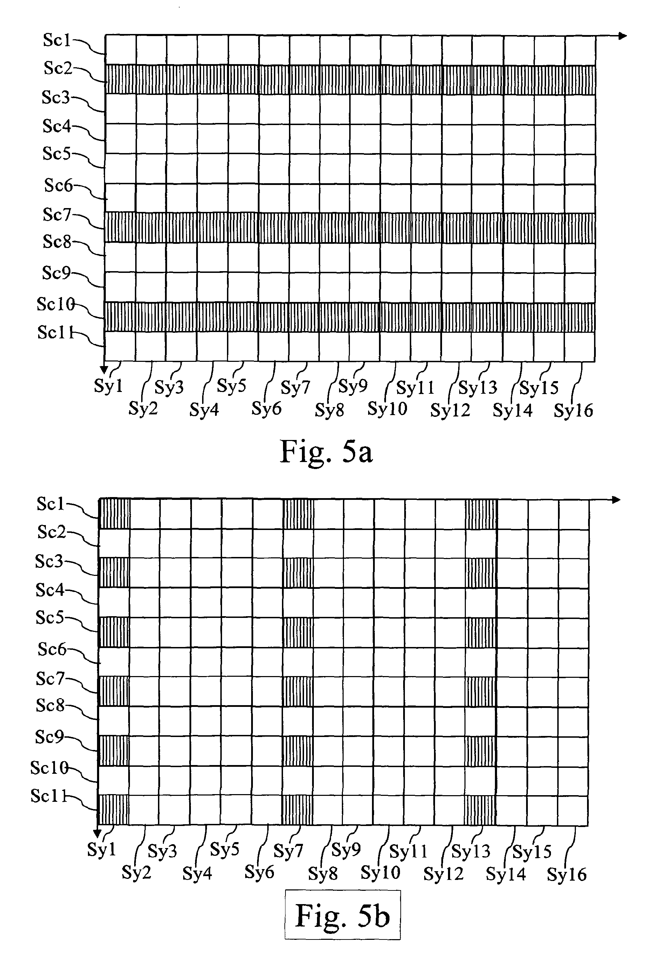

**Fig. 5a** discloses a first example of the merging of pilot sequences and data according to the present invention.

On the horizontal axis, representing the time domain, plural SC-OFDM symbols noted Sy1 to Sy16 are represented.

The vertical axis represents the subcarriers Sc1 to Sc11 on which SC-OFDM symbols are mapped.

Fig. 5a shows an example wherein eleven subcarriers are shown. The present invention is also applicable when there are more or less subcarriers.

The squares filed by vertical hatching represent the subcarriers on which, for a given SC-OFDM symbol, at least one pilot sequence is mapped.

The other squares represent the subcarriers on which data are mapped.

In the Example of Fig. 5a, continual pilot sequences are shown. Continual pilot sequences are inserted in a given set of frequencies, for all or almost all the OFDM symbols in a frame. This insertion can be regular or irregular in the frequency domain and is regular in the time domain. Continual pilot sequences are useful for estimating a frequency drift of the receiver signal at receiver stage and therefore for performing automatic frequency control or for correcting the phase noise.

In the example of Fig. 5a, pilot sequences are continuously mapped on the subcarriers Sc2, Sc7 and Sc10.

It has to be noted here that the same pilot sequence may be mapped on subcarriers Sc1, Sc7 and Sc10 of SC-OFDM symbols Sy1 to Sy16 or different pilot sequences may be mapped on subcarriers Sc1, Sc7 and Sc10 of SC-OFDM symbols Sy1 to Sy16.

**Fig. 5b** discloses a second example of the merging of pilot sequences and data according to the present invention.

On the horizontal axis, representing the time domain, plural SC-OFDM symbols noted Sy1 to Sy16 are represented.

The vertical axis represents the subcarriers Sc1 to Sc11 on which SC-OFDM symbols are mapped.

Fig. 5b shows an example wherein eleven subcarriers are shown. The present invention is also applicable when there are more or less subcarriers.

The squares filed by vertical hatching represent the subcarriers on which, for a given SC-OFDM symbol, at least one pilot sequence is mapped.

The other squares represent the subcarriers on which data are mapped.

In the Example of Fig. 5b, within six SC-OFDM symbols, one SC-OFDM symbol is composed of at least one shifted pilot sequence which is mapped on one subcarrier on two of the subcarriers on which the SC-OFDM symbol is mapped. Data are mapped on the other subcarriers.

The SC-OFDM symbols Sy1, Sy7 and Sy13 comprise scattered pilot sequences and are composed of at least one pilot sequence which is mapped on the subcarriers Sc1, Sc3, Sc5, Sc7, Sc9 and Sc11 and of data which are mapped on subcarriers Sc2, Sc4, Sc6, Sc8 and Sc 10.

It has to be noted here that the same pilot sequence may be mapped on subcarriers Sc1, Sc3, Sc5, Sc7, Sc9 and Sc11 of SC-OFDM symbols Sy1, Sy7 and Sy13 or different pilot sequences may be mapped on subcarriers Sc1, Sc3, Sc5, Sc7, Sc9 and Sc11 of SC-OFDM symbols Sy1, Sy7 and Sy13.

The SC-OFDM symbols Sy2 to Sy6, Sy8 to Sy12 and Sy14 to Sy16 are composed of data which are mapped on subcarriers Sc1 to Sc 11.

Hybrid symbols comprising scattered pilot sequences are useful for channel estimation.

The insertion of pilot sequences can be regular or irregular in the frequency domain and/or in the time domain.

It has to be noted here that the present invention is also applicable when the first and second examples of Fig. 5a and 5b are combined.

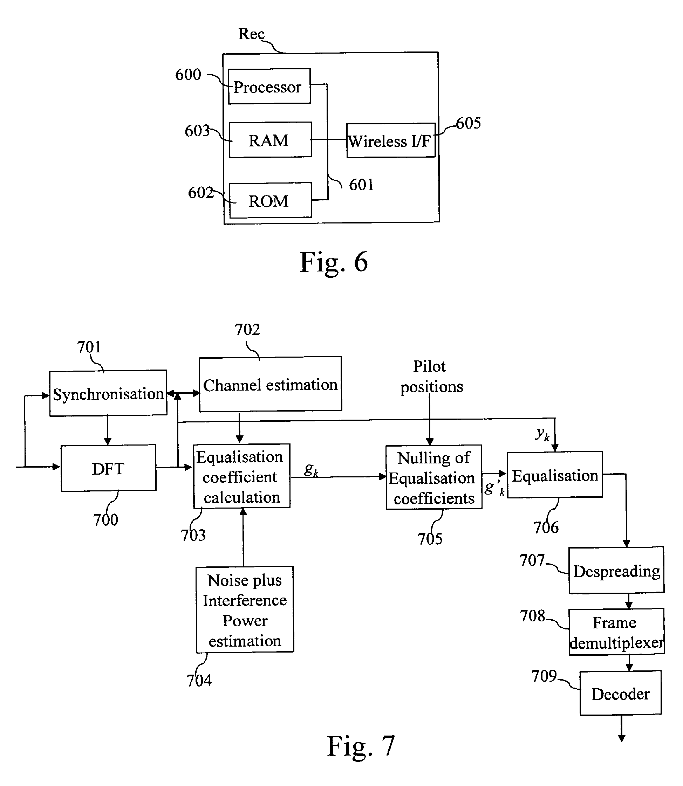

**Fig. 6** is a diagram representing the architecture of a receiver in which the present invention is implemented.

The receiver Rec has, for example, an architecture based on components connected together by a bus 601 and a processor 600 controlled by the program as disclosed in Fig. 9.

It has to be noted here that the receiver Rec may have an architecture based on dedicated integrated circuits.

The bus 601 links the processor 600 to a read only memory ROM 602, a random access memory RAM 603 and a wireless interface 605.

The memory 603 contains registers intended to receive variables and the instructions of the program related to the algorithm as disclosed in Fig. 9.

The processor 600 controls the operation of the wireless interface 605.

The read only memory 602 contains instructions of the program related to the algorithm as disclosed in Fig. 9, which are transferred, when the receiver Rec is powered on, to the random access memory 603.

The wireless interface 605 comprises means for transferring multiplexed data and pilot sequences according to the invention to receivers Rec.

The wireless interface 605 comprises components as disclosed in Fig. 7.

**Fig. 7** discloses an example of implementation of the present in the frequency domain.

The wireless interface 605 comprises a synchronisation module 701 which is in charge of synchronising a DFT module 700 and a channel estimation module 702 of the wireless interface 605 on the received symbols.

The DFT module 700 transforms the received symbols from the time domain to the frequency domain into received spread data $y_k$ where k denotes the index of subcarrier.

The transformed received symbols are provided to the channel estimation module 702 and to a equalization coefficient calculation module 703.

The channel estimation module 702 estimates the channel between the source Src and the receiver Rec at scattered pilot sequence positions, performs an interpolation for the subcarriers on which data are mapped in order to estimate the channel between the source Src and the receiver Rec on subcarriers on which data are mapped.

It has to be noted here that, the at least one pilot sequence is time shifted by half a sampling period.

The output of the channel estimation module 702 is provided to the equalisation coefficient calculation module 703.

The equalisation coefficient calculation module 703 determines equalisation coefficients taking into account a reliability information provided by the channel estimation module 702 and in a particular mode of realisation of the present invention, taking also into account an estimation of the noise plus interference power estimation provided by a noise plus interference power estimation module 704.

In a variant of realisation, there is no noise plus interference power estimation module 704. The noise plus interference power is set at a predetermined value or is defined according to the modulation and/or the code rate used by the source Src for transferring symbols.

A coefficient $g_k$, where k denotes the index of subcarrier is usually determined for each subcarrier of a given SC-OFDM symbol.

The determined coefficients are provided to a nulling equalisation coefficient module 705.

The nulling equalisation coefficient module 705 performs the inversion operation of puncturing, i.e. depuncturing. At the subcarriers where data were suppressed, 'ghost' (or fictive, e.g. zero) symbols are inserted, with a corresponding reliability information set to zero.

This allows a correct management of the depuncturing by the equalisation module 706. it has to be noted here that the depuncturing is performed before despreading i.e on spread symbols.

The nulling equalisation coefficient module 705 provides coefficients $g'_k$,

For example, let us consider the important case of MMSE equalizer 703 and 706. By assuming a channel frequency response equal to $h_k$ for the subcarrier of index k, and assuming a noise plus interference power equal to $\sigma^2$, the equalisation multiplying coefficient is equal to:

$$ g_k = \frac{\hat{h}_k^*}{\left|\hat{h}_k\right|^2 + \hat{\sigma}^2} $$

where the superscript '∧' indicates an estimate of the channel frequency response $h_k$ for the subcarrier of index k, or an estimate of the noise plus interference variance. In case a null reliability information is set for a subcarrier, $g'_k = 0$, elsewhere $g'_k = g_k$.

The equalisation module 706 multiplies the received spread data $y_k$ by the coefficients coefficients $g'_k$.

The equalised symbols are de-spread by a de-spreading module 707.

The output of the de-spreading module 707 is connected to a frame demultiplexer which de-multiplexes the equalized and de-spread symbols.

The output of the frame demultiplexer 708 is connected to a decoder 709 which at least de-interleaves and decodes data.

**Fig. 8** discloses an example of an algorithm executed by a source according to the present invention.

The present algorithm is executed by the processor 200 of the source Src.

At step S800, the processor 200 is informed that data have to be transferred by the source Src.

At next step S801, the processor 200 commands the process of data to be transferred.

Data to be transferred are interleaved, coded and organized as data elementary symbols.

In a variant of realization, a constellation shift of a predetermined value of degrees is performed for one data elementary symbol in two.

If the modulation is a Quadrature Phase Shift Keying modulation, the predetermined value is equal to forty five.

A next step S802, the processor 200 commands the spreading of the data elementary symbols from the time domain to the frequency domain by a DFT module.

At next step S803, the processor 200 commands the puncturing of the data elementary symbols. The data elementary symbols spread in the frequency domain are punctured.

At next step S804, the processor 200 obtains at least one pilot sequence. Each pilot sequence has the property that almost fixed amplitudes are obtained also after performing a DFT over such sequence.

According to a particular mode of realization of the present invention, each obtained pilot sequence is shifted by half a sampling period duration.

At next step S805, the processor 200 replaces the punctured part of the spread data by at least one pilot sequence which is mapped on subcarriers comprised in the frequency band on which the part of punctured data should be mapped if not punctured.

A next step S806, signal provided by the step S805 is OFDM modulated prior to be transferred through one or plural antennas.

An optional cyclic prefix insertion module, can be applied before transmission through the antenna or antennas of the source Src.

**Fig. 9** discloses an example of an algorithm executed by a receiver according to the present invention.

The present algorithm is executed by the processor 600 of the receiver Rec.

At step S900, the processor 600 is informed of the reception of a frame composed of signals representative of received symbols.

At next step S901, the processor 600 commands the process of the received symbols. The received symbols are transformed from the time domain to the frequency domain using a DFT and are provided to the channel estimation module.

At next step S902, the processor 600 obtains the positions of the at least one pilot sequence in the received frame.

At next step S903, the processor 600 commands the estimation of the channel between the source Src and the receiver Rec in order to provide equalisation coefficients.

At that step, equalisation coefficients are determined taking into account a reliability information provided by the channel estimation module 702 and in a particular mode of realisation of the present invention, taking also into account an estimation of the noise plus interference power estimation provide by the noise plus interference power estimation module 704.

At next step S904, the processor 600 commands the insertion of ghost data at the positions of the pilot sequences, i.e. performs an inverse operation as the puncturing of data executed at the source Src.

At the subcarriers where data were punctured, elements named 'ghost' (or fictive, e.g. zero) symbols are inserted, with a corresponding reliability information set to zero. This allows a correct management of the depuncturing.

At next step S905, the processor 600 commands the equalisation of the link.

An equalisation of the link is performed on the subcarriers on which data are mapped and on each subcarrier on which one element is mapped.

At next step S905, the processor 600 commands the de-spreading of the equalised symbols.

Naturally, many modifications can be made to the embodiments of the invention described above without departing from the scope of the present invention.

**Claims**

1. Method for transferring data and information enabling an estimate of a wireless link between a source and at least one receiver using single carrier orthogonal frequency division multiplex scheme, **characterised in that** the method comprises the steps, executed by the source, of :

   - spreading data from the time domain to the frequency domain,
   - replacing at least a part of spread data by at least one pilot sequence,
   - mapping spread data which are not replaced by the at least one pilot sequence and the at least one pilot sequence replacing spread data on subcarriers,
   - executing an orthogonal frequency division multiplex modulation on the mapped data and the at least one mapped pilot sequence in order to form an orthogonal frequency division multiplex modulated symbol,
   - transferring the orthogonal frequency division multiplex modulated symbol to the receiver.

2. Method according to claim 1, **characterised in that** the at least one pilot sequence has the property that the variations of amplitudes obtained after performing a discrete Fourier transform over said at least one pilot sequence are limited.

3. Method according to claim 1 or 2, **characterised in that** the at least one pilot sequence is time shifted by half a sampling period or spread data which are not replaced by the at least one pilot sequence are time shifted by half a sampling period.

4. Method according to the claim 2 or 3, **characterised in that** the at least one pilot sequence is a Zadoff-Chu sequence.

5. Method according to any of the claims 1 to 4, **characterised in that** prior spreading from the time domain to the frequency domain, the method comprises further steps of:

   - coding and modulating data in order to form elementary symbols,
   - performing a constellation shift of a predetermined value of degrees for one elementary symbol in two.

6. Method according to the claim 5, **characterised in**

**that** the modulation is a Quadrature Phase Shift Keying modulation and predetermined value is equal to forty five.

7. Method according to any of the claims 1 to 6, **characterised in that** the source has one antenna or plural antennas for transferring the orthogonal frequency division multiplex modulated symbols.

8. Method according to any of the claims 1 to 7, **characterised in that** the method is executed for plural consecutive single carrier orthogonal frequency division multiplex modulation symbols.

9. Method for estimating a wireless link between a source and a receiver using single carrier orthogonal frequency division multiplex scheme, **characterised in that** the method comprises the steps, executed by the receiver, of :

   - receiving symbols,
   - transforming the received symbols from the time domain to the frequency domain, the received symbols being formed by data and at least one pilot sequence, data and pilot sequence being mapped on subcarriers of the link,
   - estimating the link on subcarriers on which the at least one pilot sequence is mapped and on which data are mapped,
   - replacing each element of the at least one pilot sequence by an element of which a reliability information is set to zero,
   - performing an equalisation of the link on the subcarriers on which data are mapped and on each subcarrier on which one element is mapped.

10. Method according to claim 9, **characterised in that** the at least one pilot sequence has the property that the variations of amplitudes obtained after performing a discrete Fourier transform over said at least one pilot sequence are limited.

11. Method according to claim 10, **characterised in that** the at least one pilot sequence is time shifted by half a sampling period or spread data which are not replaced by the at least one pilot sequence are time shifted by half a sampling period.

12. Device for transferring data and information enabling an estimate of a wireless link between a source and at least one receiver using single carrier orthogonal frequency division multiplex scheme, **characterised in that** the device is included in the source and comprises :

   - means for spreading data from the time domain to the frequency domain,

- means for replacing at least a part of spread data by at least one pilot sequence,
- means for mapping spread data which are not replaced by the at least one pilot sequence and the at least one pilot sequence replacing spread data on subcarriers,
- means for executing an orthogonal frequency division multiplex modulation on the mapped data and the at least one mapped pilot sequence in order to form an orthogonal frequency division multiplex modulated symbol,
- means for transferring the orthogonal frequency division multiplex modulated symbol to the receiver.

13. Device for estimating a wireless link between a source and a receiver using single carrier orthogonal frequency division multiplex scheme, **characterised in that** the device is included in the receiver and comprises :

- means for receiving symbols,
- means for transforming the received symbols from the time domain to the frequency domain, the received symbols being formed by data and at least one pilot sequence, data and pilot sequence being mapped on subcarriers of the link,
- means for estimating the link on subcarriers on which the at least one pilot sequence is mapped and on which data are mapped,
- means for replacing each element of the at least one pilot sequence by an element of which a reliability information is set to zero,
- means for performing an equalisation of the link on the subcarriers on which data are mapped and on each subcarrier on which one element is mapped.

14. Computer program which can be directly loadable into a programmable device, comprising instructions or portions of code for implementing the steps of the method according to claims 1 to 8, when said computer program is executed on a programmable device.

15. Computer program which can be directly loadable into a programmable device, comprising instructions or portions of code for implementing the steps of the method according to claims 9 to 11 when said computer program is executed on a programmable device.

St

Satellite
Transmitter

Src

Source

Tt

Terrestrial
transmitter

Src

Source

Rec

# Fig. 1

Src

200 — Processor

203 — RAM

202 — ROM

Wireless I/F — 205

201

# Fig. 2

Bit interleaving Coding/modulation 30 → Spreading (DFT) 31 → Frame builder 32 → OFDM 33 →

## Fig. 3

32

Null subcarriers

40 — Pilot sequence generation

41 ⊗

$e^{\pm i\pi k}$

44 — Multiplexer

Replacement module 42

46

Data → Puncturing

Control 43

## Fig. 4

Fig. 5a

Fig. 5b

Rec

600 — Processor

603 — RAM — Wireless I/F — 605

601

602 — ROM

# Fig. 6

701
Synchronisation

702
Channel estimation

Pilot positions

DFT

700

Equalisation coefficient calculation

703

$g_k$

Nulling of Equalisation coefficients

705

$g'_k$

$y_k$

Equalisation

706

Noise plus Interference Power estimation

704

707 — Despreading

708 — Frame demultiplexer

709 — Decoder

# Fig. 7

S800 — Data to transfer

S801 — Process data

S802 — Spread data into frequency domain

S803 — Puncturing

S804 — Obtain pilot sequence

S805 — Replace punctured Data by pilot sequence

S806 — Transfer

Fig. 8

S900 — Receive signal

S901 — Process symbols

S902 — Obtain pilot positions

S903 — Channel estimation

S904 — Ghost insertion

S905 — Equalisation

S906 — De-spread

Fig. 9

Europäisches
Patentamt
European
Patent Office
Office européen
des brevets

## EUROPEAN SEARCH REPORT

**Application Number**

EP 10 00 6199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 775 770 A1 (MATSUSHITA ELECTRIC IND CO LTD [JP]) 18 April 2007 (2007-04-18)<br>* paragraph [0002] *<br>* paragraph [0025] - paragraph [0029] *<br>* paragraph [0063] - paragraph [0065] *<br>* figures 10, 11a, 11b *<br>----- | 1-15 | INV.<br>H04L27/26<br>H04L5/00 |
| X | US 2004/061464 A1 (KIM SANG YOUNG [KR] ET AL) 1 April 2004 (2004-04-01)<br>* figure 7 *<br>* page 26, line 2 *<br>----- | 1-15 | |
| X | WO 2007/138753 A1 (HITACHI COMM TECH LTD [JP]; TAMAKI SATOSHI [JP]; YANO TAKASHI [JP]) 6 December 2007 (2007-12-06) | 1-8,12, 14 | |
| A | | 9-11,13, 15 | |
| | -& US 2010/020889 A1 (TAMAKI SATOSHI [JP] ET AL) 28 January 2010 (2010-01-28)<br>* paragraph [0010] *<br>* paragraph [0030] - paragraph [0032] *<br>* paragraph [0035] *<br>* figures 6a, 6b, 6c *<br>----- | | **TECHNICAL FIELDS SEARCHED (IPC)**<br><br>H04L |
| A | US 2010/046663 A1 (HAN SEUNG HEE [KR] ET AL) 25 February 2010 (2010-02-25)<br>* paragraph [0002] *<br>* paragraph [0004] *<br>* paragraph [0013] *<br>* paragraph [0128] *<br>* paragraph [0133] *<br>----- | 3,11 | |

The present search report has been drawn up for all claims

| Place of search | Date of completion of the search | Examiner |
|---|---|---|
| Berlin | 8 October 2010 | Farese, Luca |

EPO FORM 1503 03.82 (P04C01)

## ANNEX TO THE EUROPEAN SEARCH REPORT
## ON EUROPEAN PATENT APPLICATION NO.

EP 10 00 6199

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2010

| Patent document cited in search report | | Publication date | Patent family member(s) | | Publication date |
|---|---|---|---|---|---|
| EP 1775770 | A1 | 18-04-2007 | BR | PI0513804 A | 13-05-2008 |
| | | | CN | 1985372 A | 20-06-2007 |
| | | | WO | 2006011376 A1 | 02-02-2006 |
| | | | KR | 20070036147 A | 02-04-2007 |
| | | | US | 2008304583 A1 | 11-12-2008 |
| US 2004061464 | A1 | 01-04-2004 | CN | 1487652 A | 07-04-2004 |
| | | | EP | 1406371 A2 | 07-04-2004 |
| | | | JP | 3723544 B2 | 07-12-2005 |
| | | | JP | 2004129478 A | 22-04-2004 |
| | | | KR | 20040029618 A | 08-04-2004 |
| WO 2007138753 | A1 | 06-12-2007 | US | 2010020889 A1 | 28-01-2010 |
| US 2010020889 | A1 | 28-01-2010 | WO | 2007138753 A1 | 06-12-2007 |
| US 2010046663 | A1 | 25-02-2010 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- ETSI ETS 300401. May 1997
- Radio broadcasting systems; Digital Audio Broadcasting (DAB) to mobile, portable and fixed receivers. *ETSI EN 300401,* June 2006, vol. 1.4.1
- A simple transmit diversity technique for wireless communications. *IEEE J. Select. Areas Communications,* October 1998, vol. 16, 1451-1458